(19) **Europäisches Patentamt / European Patent Office / Office européen des brevets**

(11) **EP 3 182 292 B1**

(12) **FASCICULE DE BREVET EUROPEEN**

(45) Date de publication et mention
de la délivrance du brevet:
**20.06.2018 Bulletin 2018/25**

(51) Int Cl.:
**G06F 12/0862** *(2016.01)* **G06N 5/02** *(2006.01)*
**G06N 7/00** *(2006.01)*

(21) Numéro de dépôt: **16201190.2**

(22) Date de dépôt: **29.11.2016**

(54) **PROCÉDÉ DE PRÉDICTION D'UNE DONNÉE A PRÉCHARGER DANS UNE MÉMOIRE CACHE**

VERFAHREN ZUR VORHERSAGE EINER DATENINFORMATION, DIE VORAB IN EINEN
CACHE-SPEICHER GELADEN WERDEN MUSS

METHOD FOR PREDICTING DATA TO BE PRE-LOADED IN A CACHE MEMORY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.12.2015 FR 1562435**

(43) Date de publication de la demande:
**21.06.2017 Bulletin 2017/25**

(73) Titulaire: **Commissariat à l'Énergie Atomique
et aux Énergies Alternatives
75015 Paris (FR)**

(72) Inventeurs:
• **LESECQ, Suzanne
38190 Froges (FR)**

• **CHARLES, Henri-Pierre
38000 Grenoble (FR)**
• **MANCINI, Stephane
38000 Grenoble (FR)**
• **VINCENT, Lionel
38600 Fontaine (FR)**

(74) Mandataire: **Colombo, Michel
Innovation Competence Group
310, avenue Berthelot
69372 Lyon Cedex 08 (FR)**

(56) Documents cités:
**US-A- 5 305 389**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un procédé d'exécution d'un programme mettant en oeuvre un procédé de prédiction d'une donnée à précharger dans une mémoire cache. L'invention concerne également un support d'enregistrement d'informations et un module électronique pour la mise en oeuvre de ce procédé de prédiction.

Il est très important de prédire le plus correctement possible la donnée à précharger dans une mémoire cache car cela limite les « défauts de cache » ou « miss » en anglais. Cela limite donc le nombre de fois où le microprocesseur doit aller chercher la donnée à laquelle il souhaite accéder dans une autre mémoire moins rapide que la mémoire cache. En effet, si la prédiction est correcte, la donnée à laquelle le microprocesseur souhaite accéder a alors été préchargée dans la mémoire cache avant même que le microprocesseur exécute l'instruction de lecture de cette donnée. Dès lors, lorsqu'il exécute cette instruction de lecture, il peut très rapidement obtenir la donnée à laquelle il souhaite accéder. A l'inverse, en cas de défaut de cache, le temps passé par le microprocesseur pour lire la donnée dans une autre mémoire est plus long. A cause de cela, ce temps passé à lire dans une autre mémoire que la mémoire cache est appelé « pénalité ». Ainsi, le fait de limiter le nombre de défauts de cache permet d'améliorer les performances et donc d'accélérer l'exécution d'un programme par le microprocesseur.

De nombreux procédés de prédiction de la donnée à précharger dans la mémoire cache ont déjà été proposés. Par exemple, de tels procédés ont été décrits dans les documents suivants :

- US5305389 A1, et
- Joseph D., Grunwald D., « Prefetching using Markov predictors », Computers, IEEE transactions, vol. 48, n° 2, pp.121-133, février 1999.

En particulier, certains procédés connus comportent :

a) pour chaque instant t où un microprocesseur exécute une instruction de lecture d'une donnée nécessaire à l'exécution d'un programme, le calcul d'un écart, appelé delta, entre l'adresse de la donnée à lire contenue dans cette instruction de lecture exécutée à l'instant t et l'adresse de la donnée à lire contenue dans cette même instruction de lecture lors de sa précédente exécution à un instant t-1, deux instructions de lecture étant les mêmes si elles correspondent toutes les deux à la même valeur du compteur ordinal du microprocesseur, et

b) la mémorisation d'une séquence d'accès observée contenant uniquement les N deltas calculés successivement pour chaque instant t compris à l'intérieur d'une fenêtre glissante $[t_1 ; t_0]$, où les instants $t_0$ et $t_1$ sont égaux aux instants t, respectivement le plus récent et le plus ancien, pour lesquels a été calculé un delta de la séquence d'accès observée et le nombre N est un nombre entier prédéterminé supérieur ou égal à deux.

Dans les procédés connus, le prochain delta de la séquence d'accès observée est prédit en comparant la séquence d'accès observée à une séquence d'accès modèle. Dans ce contexte, la séquence d'accès modèle est souvent appelée « Motif » ou « Pattern » en anglais. Il s'agit d'une succession temporelle prédéterminée de deltas qui se répète plusieurs fois lors de l'exécution du programme.

Par exemple, si la séquence d'accès modèle est la suite temporelle de deltas suivants : 1, 2, 3, 4, 3, 2 et si la séquence d'accès observée est la suite suivante : 1, 2, 3, 4, 3, alors les procédés connus prédisent que le prochain delta aura très probablement la valeur 2. Pour cela, les procédés connus identifient la valeur du delta à ajouter à la séquence d'accès observée qui maximise la corrélation temporelle avec la séquence d'accès modèle. Ensuite, la donnée à précharger dans la mémoire cache est la donnée enregistrée à l'adresse déduite à partir de ce delta prédit et de l'adresse lue lors de la dernière exécution de l'instruction de lecture.

A l'inverse, si la séquence d'accès observée est la séquence 4, 3, 1, 2, 3, les procédés connus remarquent que la suite 4, 3, 1, 2, 3 n'est pas corrélée temporellement avec la séquence d'accès modèle 1, 2, 3, 4, 3, 2. Par conséquent, dans ce cas, les procédés connus ne sont pas capables de fournir une donnée à précharger dans la mémoire cache.

L'objectif de la présente invention est de proposer un procédé amélioré de prédiction de la donnée à précharger dans la mémoire cache. Elle a donc pour objet un tel procédé conforme à la revendication 1.

Dans le procédé revendiqué, une distribution statistique modèle est utilisée pour identifier le delta prédit qui a le plus de chance d'être calculé pour l'instant t suivant. Plus précisément, dans le procédé revendiqué, on considère que le delta prédit qui a le plus de chance de se produire est celui qui permet de minimiser les écarts entre la distribution statistique modèle et la distribution statistique observée. Grâce à cette approche, il n'est pas nécessaire qu'il existe une corrélation temporelle parfaite entre une séquence d'accès modèle et la séquence d'accès observée pour être capable de prédire la prochaine donnée à précharger. Par exemple, si l'on reprend l'exemple ci-dessus où la séquence d'accès modèle est 1, 2, 3, 4, 3, 2, la distribution statistique modèle associée à cette séquence associe aux valeurs 1, 2, 3 et 4 les nombres d'occurrence, respectivement, 1, 2, 2, 1. En d'autres termes, la distribution statistique modèle indique que dans la séquence d'accès modèle, la valeur 1 apparaît une seule fois, la valeur 2 apparaît deux fois, la valeur 3 apparaît deux fois et la valeur 4 apparaît une fois.

Si la séquence d'accès observée est 4, 3, 1, 2, 3, la distribution statistique observée construite pour cette séquence d'accès observée associe les valeurs 1, 2, 3, 4 respectivement en nombre d'occurrences 1, 1, 2, 1. On voit donc que le prochain delta de la séquence d'accès qui permettrait de rapprocher la distribution statistique observée le plus près possible de la distribution statistique modèle est un delta prédit dont la valeur est égale à 2. Ainsi, dans ces conditions, le procédé revendiqué est capable de prédire une donnée à précharger en mémoire cache même si l'ordre temporel des deltas de la séquence d'accès observée n'est pas le même que celui de la séquence d'accès modèle. Ainsi, le procédé revendiqué est robuste vis-à-vis d'un changement dans l'ordre temporel des deltas de la séquence d'accès observée par rapport à l'ordre temporel des deltas dans la séquence d'accès modèle.

Le procédé revendiqué a été mis en oeuvre lors de l'exécution d'un programme où l'ordre temporel des deltas d'un motif peut changer par rapport à l'ordre de ces mêmes deltas dans une séquence d'accès modèle. Les résultats obtenus montrent que le procédé revendiqué estime plus souvent plus correctement la donnée à précharger dans la mémoire cache. La mise en oeuvre du procédé revendiqué a donc rendu l'exécution de ce programme plus rapide.

Les modes de réalisation de ce procédé de prédiction peuvent comporter une ou plusieurs des caractéristiques des revendications dépendantes.

Ces modes de réalisation du procédé de prédiction présentent en outre les avantages suivants :

- La construction de la distribution statistique modèle à partir d'une séquence d'accès modèle relevée pendant une fenêtre glissante antérieure permet d'adapter dynamiquement la distribution statistique modèle au fur et à mesure de l'exécution du programme tout en limitant la quantité de ressource mémoire utilisée.
- Le fait que la séquence d'accès modèle précède immédiatement la séquence d'accès observée permet d'adapter très rapidement la distribution statistique modèle à une modification du motif qui se répète lors de l'exécution du programme.
- Le calcul d'une métrique de similarité entre les distributions statistiques modèle et observée ou le calcul d'une erreur de prédiction permet de détecter automatiquement que la taille de la séquence d'accès modèle ou de la séquence d'accès observée n'est plus adaptée au motif qui se répète lors de l'exécution du programme et donc de déclencher automatiquement une modification de cette taille au cours de l'exécution du programme.
- L'utilisation d'une distribution statistique de prédiction en plus de la distribution statistique modèle permet de tester les conséquences d'une modification de la taille de la séquence d'accès modèle pour essayer de trouver une taille qui permette d'obtenir de meilleurs résultats que la taille actuelle de la séquence d'accès modèle et cela sans dégrader la qualité actuelle des prédictions fournies.
- Le fait que la séquence d'accès observée contienne systématiquement le delta qui s'est produit à l'instant t le plus récent, permet de réagir plus rapidement à une modification du motif qui se répète lors de l'exécution du programme et donc d'adapter plus rapidement le procédé de prédiction à cette modification.
- Le fait de ne prédire qu'une seule donnée à précharger permet de limiter la taille des ressources mémoires nécessaires pour enregistrer les données prédites. Cela permet également de limiter la pollution de la mémoire cache par des remplacements inutiles de lignes de cette mémoire cache.

L'invention a également pour objet un support d'enregistrement d'informations comportant des instructions pour l'exécution du procédé revendiqué, lorsque ces instructions sont exécutées par un calculateur électronique.

L'invention a également pour objet un module électronique de prédiction d'une donnée à précharger dans une mémoire cache, ce module étant agencé pour mettre en oeuvre le procédé revendiqué.

L'invention sera mieux comprise avec la lecture de la description qui va suivre, donnée uniquement à titre d'exemple non limitatif, et faite en se référant aux dessins sur lesquels :

- la figure 1 est une illustration schématique d'une unité électronique de traitement,
- la figure 2 est une illustration schématique du code d'un programme d'ordinateur exécuté par l'unité de traitement de la figure 1 ;
- la figure 3 est un organigramme générique d'un procédé de fonctionnement de l'unité de traitement de la figure 1 ;
- la figure 4 est un organigramme d'un procédé de prédiction d'une donnée à précharger dans une mémoire cache, mis en oeuvre dans le procédé de la figure 3 ;
- la figure 5 est un chronogramme illustrant différentes séquences d'accès utilisées lors de la mise en oeuvre du procédé de la figure 4 ;
- la figure 6 est un histogramme utilisé pour représenter des distributions statistiques utilisées lors de la mise en oeuvre du procédé de la figure 4 ;
- la figure 7 est un chronogramme illustrant l'évolution des prédictions fournies par le procédé de la figure 4 au cours du temps ;

- la figure 8 est un organigramme d'un autre mode de réalisation d'un procédé de prédiction d'une donnée à précharger dans une mémoire cache, susceptible d'être mis en oeuvre à la place du procédé de la figure 4 ;
- la figure 9 est une illustration schématique de deux fonctions de répartition utilisées dans le procédé de la figure 8 ;
- la figure 10 est un organigramme d'un procédé d'adaptation automatique de la taille d'une séquence d'accès modèle, utilisable en combinaison avec le procédé de la figure 4 ou 8 ;
- la figure 11 est un chronogramme illustrant l'évolution au cours du temps de deux grandeurs Po et Eo calculées par le procédé de la figure 10 ;
- la figure 12 est un chronogramme illustrant l'évolution au cours du temps des tailles M et N de deux séquences d'accès calculées par le procédé de la figure 10 ;
- la figure 13 est un organigramme d'un procédé d'adaptation automatique de la taille des séquences d'accès utilisable en combinaison avec le procédé de la figure 4 ou 8.

Dans ces figures les mêmes références sont utilisées pour désigner les mêmes éléments. Dans la suite de cette description, les caractéristiques et fonctions bien connues de l'homme du métier ne sont pas décrites en détail.

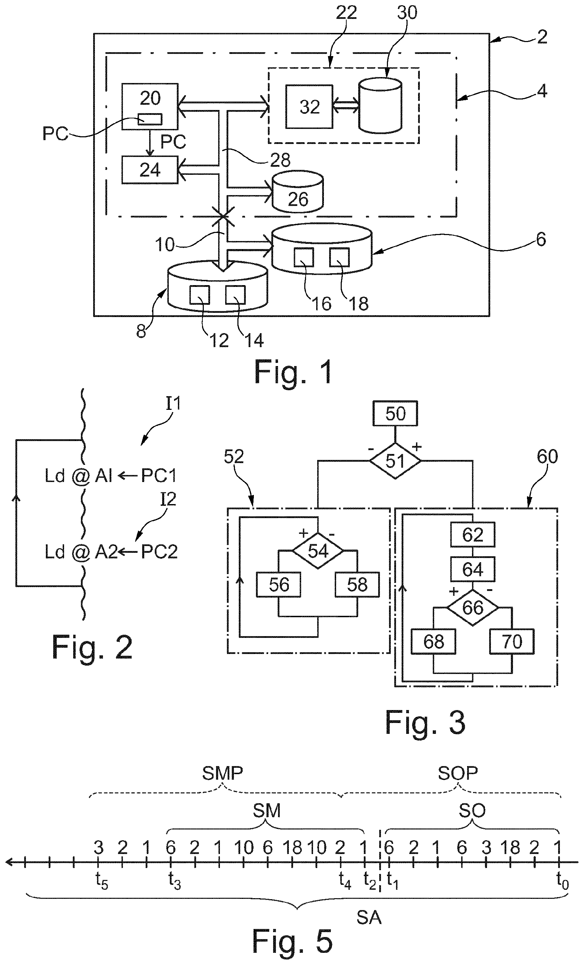

La figure 1 représente une unité électronique 2 de calcul. Par exemple, l'unité 2 est un ordinateur. La structure matérielle d'un tel ordinateur est bien connue et seuls les éléments nécessaires à la compréhension de l'invention sont représentés et décrits plus en détail. L'unité 2 comporte :

- un calculateur électronique programmable 4,
- une mémoire principale 6,
- une mémoire non volatile 8, et
- un bus 10 de transfert de données entre les mémoires 8, 10 et le calculateur 4.

La mémoire 6 est typiquement une mémoire rapide à laquelle le calculateur 4 accède plus rapidement qu'à la mémoire 8. Ici, la mémoire 6 est une mémoire vive. Il peut s'agir d'une mémoire volatile telle qu'une DRAM (« Dynamic Random Access Memory»). La mémoire 6 peut aussi être une mémoire vive non volatile telle qu'une mémoire FLASH.

La mémoire 8 est par exemple un disque dur ou tout autre type de mémoire non volatile. La mémoire 8 comporte un programme d'ordinateur 12 à exécuter par le calculateur 4, ainsi que des données 14 à traiter par ce programme 12 lorsque celui-ci est exécuté. Lors de l'exécution du programme 12 par le calculateur 4, les instructions du programme 12 ainsi que les données 14 sont transférées dans un premier temps dans la mémoire 6 pour y accéder plus rapidement. Dans la mémoire 6, les instructions du programme 12 et les données 14 traitées par ce programme portent, respectivement, les références numériques 16 et 18.

Typiquement, les données 14 contiennent des données structurées sous forme de matrices ou sous forme de listes chaînées. Dans une matrice, chaque donnée est identifiée par des coordonnées telles que des numéros ligne et de colonne. Dans une liste chaînée, chaque donnée comporte un pointeur vers la donnée précédente et/ou suivante de cette liste. Un exemple de données structurées est une image numérique.

Le traitement de telles données structurées par le programme 12 implique généralement l'exécution de boucles qui sont réitérées un grand nombre de fois.

Le calculateur 4 comporte :

- un microprocesseur 20 également connu sous l'acronyme CPU (« Central Processing Unit »),
- une mémoire cache 22,
- un module 24 de préchargement également connu sous le terme anglais de « prefetcher »,
- une mémoire tampon 26, et
- un bus 28 de transfert de données entre le microprocesseur 20, la mémoire 22, le module 24, la mémoire tampon 26 et le bus 10.

Le microprocesseur 20 est apte à exécuter un programme. A cet effet, il comporte en outre un registre PC appelé Compteur Ordinal (« Program Counter » en anglais) ou pointeur d'instructions (« Instruction Pointer » en anglais) qui contient l'adresse de l'instruction actuellement exécutée ou de l'instruction suivante à exécuter par le microprocesseur 20.

La mémoire cache 22 est ici une mémoire cache de niveau L1. Elle permet de stocker des données auxquelles le microprocesseur 20 peut accéder plus rapidement que si elles avaient été seulement stockées dans la mémoire 6. Par exemple ces données sont des instructions du programme 16 ou des données à traiter issues des données 18. La mémoire 22 comporte à cet effet une mémoire 30 et un micro-calculateur 32. La mémoire 30 contient les données auxquelles le microprocesseur 20 peut accéder plus rapidement sans avoir à les lire dans la mémoire 6. Le micro-calculateur 32 gère l'enregistrement et l'effacement de données dans la mémoire 30. En particulier, quand une nouvelle donnée doit être enregistrée dans la mémoire 30, le micro-calculateur 32 détermine selon un algorithme qui lui est propre la ou les données à effacer dans la mémoire 30 pour libérer la place nécessaire à l'enregistrement de cette nouvelle donnée dans la mémoire cache 22.

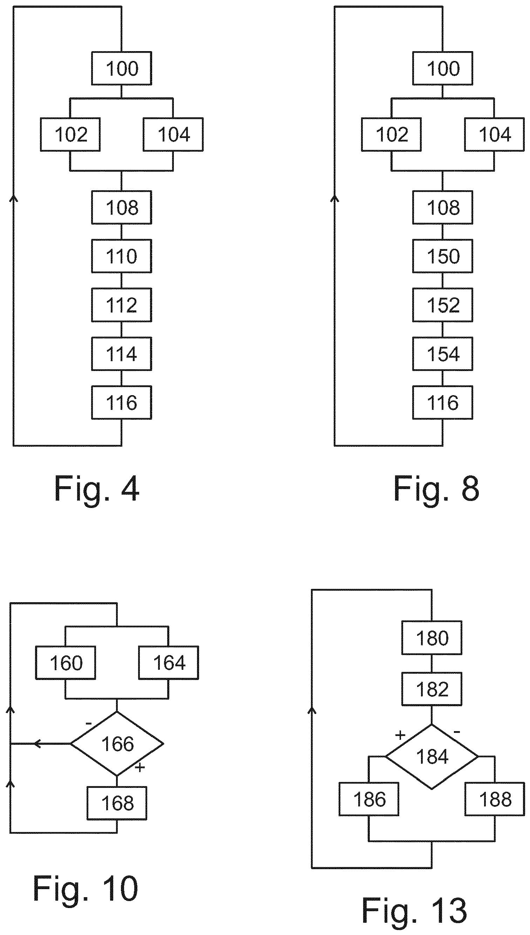

Le module 24 a pour fonction de prédire, avant que le microprocesseur 20 n'en ait besoin, là où les données à précharger dans la mémoire cache 22 puis de déclencher le préchargement de ces données. Ici, le module 24 est apte à exécuter les procédés des figures 4, 8, 10 et 13. A cet effet, le module 24 peut comporter un micro-calculateur dédié à cette fonction. Dans ce cas, il comporte sa propre mémoire contenant les instructions nécessaires pour exécuter les procédés des figures 4, 8, 10 et 13 et son propre microprocesseur qui exécute ces instructions. Il peut aussi s'agir d'un circuit intégré dédié. Dans ce cas, les instructions des procédés des figures 4, 8, 10 et 13 sont câblées en dur dans ce circuit intégré.

La mémoire 26 est ici une mémoire tampon utilisée par le module 24 pour y enregistrer temporairement la ou les données à précharger avant qu'elles soient transférées, si nécessaire, dans la mémoire cache 22.

Les différents composants du calculateur 4 sont ici fabriqués sur un même substrat telle qu'une puce en silicium.

La figure 2 représente schématiquement une portion du code exécutable du programme 12. Dans cette figure, les lignes ondulées verticales indiquent que toutes les instructions du programme 12 n'ont pas été représentées. Plus précisément, seules deux instructions de lecture « Ld @A1 » et « Ld @A2 » ont été représentées. Par la suite, ces deux instructions sont respectivement appelées instructions I1 et I2. Les instructions I1 et I2 provoquent le chargement dans des registres du microprocesseur 20, lorsqu'elles sont exécutées par ce microprocesseur 20, d'une donnée enregistrée, respectivement, aux adresses @A1 et @A2 de la mémoire 6.

Une flèche qui part d'une instruction située après l'instruction I2 et qui remonte jusqu'à une instruction située avant l'instruction I1 indique que les instructions I1 et I2 sont situées à l'intérieur d'une boucle susceptible d'être exécutée un grand nombre de fois. Les instructions I1 et I2 se situent respectivement aux adresses PC1 et PC2 du compteur ordinal PC. Ainsi, lorsque la valeur du compteur ordinal PC est égale à PC1, cela signifie que l'instruction I1 est en train d'être exécutée ou va être exécutée. Lorsque la valeur du compteur ordinal PC est égale à PC2, cela signifie que l'instruction I2 est en train d'être exécutée ou va être exécutée. Ainsi, même si les adresses @A1 et @A2 des données à lire sont égales, la valeur du compteur ordinal PC permet d'identifier sans ambiguïté l'instruction de lecture en cours d'exécution ou qui va être exécutée.

Typiquement, les adresses @A1 et @A2 sont des adresses calculées par les instructions qui précèdent, respectivement, les instructions I1 et I2. Ainsi, d'une itération à la suivante de la boucle, la valeur des adresses @A1 et @A2 peut changer alors que les valeurs du compteur ordinal PC identifiant les instructions I1 et I2 ne changent pas lors de ces réitérations successives de la boucle. La donnée lue à l'adresse @A1 ou @A2 peut être une instruction exécutable par le microprocesseur 20 ou une donnée à traiter par ce microprocesseur 20.

Dès lors, comme décrit par la suite, la valeur du compteur ordinal PC est utilisée pour identifier de façon fiable une instruction de lecture donnée parmi l'ensemble des instructions de lecture que contient le programme 12.

Le fonctionnement générique de l'unité 2 de calcul va maintenant être décrit en référence au procédé de la figure 3.

Au démarrage de l'exécution du programme 12, lors d'une étape 50, ce programme 12 et les données 14 sont chargés dans la mémoire 6 et portent dès lors les références numériques 16 et 18.

Lors d'une étape 51, le module 24 détermine s'il faut ou non mettre en oeuvre le préchargement de données dans la mémoire tampon 26. Pour cela, le module 24 vérifie si certaines conditions sont satisfaites. Si l'une de ces conditions n'est pas vérifiée, il procède seulement à une phase 52 d'exécution du programme 16 sans préchargement de données dans la mémoire tampon 26. Dans le cas contraire, il procède à une phase 60 de préchargement de données dans la mémoire tampon 26. Par exemple, lors de l'étape 51, le module 24 vérifie si la séquence SA contient au moins M+N delta et, de préférence, $T_{max}$ delta.

Lors de la phase 52, le microprocesseur 20 exécute les instructions du programme 16 pour traiter les données 18. Comme illustré sur la figure 2, lors de cette exécution, le microprocesseur 20 est amené à exécuter les instructions I1 et I2. Ces instructions I1 et I2 peuvent être exécutées un grand nombre de fois lorsqu'elles sont situées à l'intérieur d'une boucle comme c'est le cas ici. Ainsi, pour chacune de ces instructions de lecture, à partir des adresses successivement accédées lors de chaque exécution de cette instruction, il est possible de construire une séquence ordonnée temporellement de deltas. La construction d'une telle séquence de delta est décrite plus en détail en référence au procédé de la figure 4. Typiquement, cette séquence de delta peut présenter un motif qui se répète. C'est en exploitant le fait qu'un motif se répète qu'il est possible de prédire le prochain delta calculé et donc l'adresse qui sera accédée lors de la prochaine exécution de cette instruction de lecture.

À partir de maintenant, le fonctionnement de l'unité 2 est décrit dans le cas particulier de l'instruction I1. Tout ce qui est décrit dans ce cas particulier est également exécuté en parallèle pour l'instruction I2 et pour toutes les instructions de lecture situées à l'intérieur d'une boucle.

Lors d'une étape 54, en réponse à l'exécution de l'instruction I1, le micro-calculateur 32 détermine si la donnée correspondant à l'adresse @A1 est déjà contenue dans la mémoire 30 ou non.

Dans l'affirmative, lors d'une étape 56, la mémoire cache 22 retourne immédiatement la donnée demandée par le microprocesseur 20 par l'intermédiaire du bus 28. Dans ce cas, typiquement, le microprocesseur 20 attend entre 2 et 15 cycles d'horloge avant d'obtenir la donnée requise et de poursuivre l'exécution du programme 16.

Si la donnée correspondant à l'adresse @A1 ne se trouve pas déjà dans la mémoire 30, alors on est en présence d'un défaut de cache. Dans ce cas, lors d'une étape 58, la donnée est lue dans la mémoire 6 et transférée dans la mémoire cache 22. Ensuite, elle est transférée de la mémoire cache 22 vers le microprocesseur 20 par l'intermédiaire des bus 10 et 28. En cas de défaut de cache, il faut souvent que le microprocesseur 20 attende 10 ou 100 ou 1000 fois plus longtemps que lors de l'étape 56 avant d'obtenir la donnée requise et de pouvoir poursuivre l'exécution du programme 16. Ainsi, un défaut de cache ralentit considérablement l'exécution du programme 16.

La phase 60 est similaire à la phase 52 sauf que le module 24 met en plus en oeuvre le préchargement de données dans la mémoire cache 22.

Lors d'une étape 62, avant l'exécution de l'instruction de lecture I1, le module 24 prédit la donnée à précharger dans la mémoire cache 22. La prédiction doit être aussi fiable que possible pour maximiser la probabilité que la donnée requise lors de la prochaine exécution de l'instruction I1 par le microprocesseur 20 se trouve déjà dans la mémoire cache 22 ou dans la mémoire tampon 26. Un procédé de prédiction mis en oeuvre par le module 24 est décrit plus en détail en référence aux figures 4 et 8.

A l'issue de l'étape 62, lors d'une étape 64, si la donnée à précharger ne se trouve pas déjà dans la mémoire cache 22 ou dans la mémoire tampon 26, le module 24 la charge depuis la mémoire 6 et l'enregistre dans un premier temps dans la mémoire tampon 26. Typiquement, la mémoire tampon 26 est capable de contenir au maximum une ligne ou un mot complet de la mémoire 6. La taille de la mémoire tampon 26 est donc inférieure à la taille de la mémoire cache 22. On notera à ce stade que transférer un mot complet ou une ligne complète de la mémoire 6 dans la mémoire tampon 26 ne prend généralement pas plus de temps que transférer seulement la portion du mot ou de la ligne de la mémoire 6 qui contient la donnée à précharger. De plus, transférer un mot complet ou une ligne complète permet aussi de limiter l'apparition des défauts de cache.

Ensuite, le microprocesseur 20 exécute l'instruction de lecture I1.

Dès lors, lors d'une étape 66, le micro-calculateur 32 vérifie si l'adresse @A1 contenue dans l'instruction I1 en cours d'exécution correspond à une donnée déjà enregistrée dans la mémoire cache 22 ou dans la mémoire tampon 26.

Dans l'affirmative, lors d'une étape 68, si la donnée est déjà enregistrée dans la mémoire cache 22, alors le micro-calculateur 32 la transfère depuis la mémoire 30 vers le microprocesseur 20 comme décrit pour l'étape 56. Si la donnée n'est pas contenue dans la mémoire cache 22 mais dans la mémoire tampon 26, le micro-calculateur 32 transfère cette donnée depuis la mémoire tampon 26 vers la mémoire 30 puis la transfère depuis la mémoire 30 vers le microprocesseur 20 comme décrit pour l'étape 56. Typiquement, le micro-calculateur 32 recherche d'abord la donnée dans la mémoire 30 et seulement ensuite dans la mémoire tampon 26. Étant donné que la taille de la mémoire tampon 26 est très petite, même lorsque la donnée est transférée depuis la mémoire tampon 26 via la mémoire 30, le microprocesseur 20 obtient la donnée souhaitée presque aussi rapidement que si elle était contenue dans la mémoire 30. En pratique, c'est tout le contenu de la mémoire tampon qui est transféré dans la mémoire 30.

Si la donnée correspondant à l'adresse @A1 n'est pas contenue dans la mémoire 30 et la mémoire tampon 26, lors d'une étape 70, cette donnée est lue dans la mémoire 6 puis transférée dans la mémoire cache 22 avant d'être finalement transférée vers le microprocesseur 20. Pour cela, on procède comme décrit pour l'étape 58. De plus, le module 24 déclenche, seulement dans ce cas, le transfert du contenu de la mémoire tampon 26 vers la mémoire cache 22. Le micro-calculateur 32 gère alors l'enregistrement de la donnée à précharger dans la mémoire cache 22. Ainsi, dans ce mode de réalisation, la donnée à précharger est enregistrée dans la mémoire cache 22 uniquement si elle n'est pas tout de suite utilisée par le microprocesseur 20. On limite ainsi le nombre de fois où la donnée à précharger doit réellement être transférée dans la mémoire cache 22.

Un procédé de prédiction de la donnée à précharger mis en oeuvre par le module 24 lors de l'exécution de l'étape 62 va maintenant être décrit en référence à la figure 4.

Lors d'une étape 100, à chaque instant où le microprocesseur 20 exécute une instruction de lecture, le module 24 relève l'identifiant de cette instruction et le compare à une liste d'identifiants d'instructions de lecture déjà exécutées. L'identifiant de l'instruction de lecture est ici l'adresse de cette instruction contenue dans le compteur ordinal PC du microprocesseur 20.

Si l'identifiant relevé n'est pas déjà contenu dans cette liste, lors d'une étape 102, le module 24 ajoute cet identifiant à cette liste et y associe l'adresse @A de la donnée à lire contenue dans cette instruction de lecture.

Si l'identifiant relevé est déjà contenu dans la liste, alors lors d'une étape 104, le module 24 calcule l'écart, appelé delta, entre l'adresse à lire contenue dans cette instruction de lecture et l'adresse à lire contenue dans la même instruction de lecture lors de sa précédente exécution. Ensuite, le delta calculé et l'adresse à lire contenue dans l'instruction en cours d'exécution sont enregistrés dans la liste associée à l'identifiant de cette instruction.

Dans cette liste, les deltas calculés successivement pour une même instruction de lecture sont classés par ordre d'instant de calcul. Cela forme une séquence ordonnée temporellement de deltas calculés pour une même instruction de lecture. Cette séquence est appelée une séquence d'accès à la mémoire 6. Pour chaque instruction de

## EP 3 182 292 B1

lecture exécutée, le module 24 mémorise une séquence d'accès. En particulier, pour l'instruction I1, le module 24 mémorise une séquence d'accès SA (Figure 5). Ici, pour limiter l'espace mémoire nécessaire pour stocker les différentes séquences d'accès, la taille de chaque séquence d'accès est limitée. Ici, la taille est limité à un nombre maximal $T_{max}$ de deltas calculés contenus dans une même séquence d'accès. Le nombre $T_{max}$ est strictement supérieur à quatre ou six ou dix. Lorsqu'une séquence d'accès contient déjà $T_{max}$ deltas calculés et qu'un nouveau delta plus récent vient d'être calculé par le module 24, le delta le plus ancien de cette séquence d'accès est effacé et le nouveau delta calculé est ajouté à cette séquence d'accès. Ainsi, chaque séquence d'accès contient seulement les $T_{max}$ deltas calculés les plus récents.

À partir de maintenant, le fonctionnement du module 24 est décrit dans le cas particulier de l'instruction I1. Le fonctionnement du module 24 pour l'une quelconque des autres instructions de lecture exécutées par le microprocesseur 20 est le même que celui qui va être décrit dans ce cas particulier.

Pour les applications numériques données par la suite, on suppose que la séquence d'accès mémorisée pour l'instruction I1 est la séquence SA représentée sur la figure 5. Dans la figure 5, l'axe des temps est orienté d'un instant $t_0$ le plus récent vers les instants les plus anciens. Dans ce mode de réalisation, la séquence SA contient :

- une séquence d'accès SO qui contient uniquement les N deltas successifs les plus récents, et
- une séquence d'accès SM qui contient uniquement les M deltas successifs plus anciens que les deltas de la séquence SO.

Les tailles N et M sont des nombres entiers prédéterminés supérieurs ou égaux à 2 ou 4 ou 6. Le cumul des tailles N et M est toujours inférieur ou égal à la taille $T_{max}$. Dans l'exemple de la figure 5, la taille M est égale à 9 et la taille N est égale à 8.

La séquence d'accès SO est appelée séquence d'accès observée. Elle contient tous les deltas calculés pour chaque instant t d'une fenêtre glissante d'observation $[t_1; t_0]$ allant de l'instant $t_0$ à l'instant $t_1$. L'instant t est un instant où l'instruction I1 est exécutée par le microprocesseur 20 et donc pour lequel le module 24 calcule un delta puis le mémorise dans la séquence SA. L'instant $t_0$ est l'instant t le plus récent. L'instant $t_1$ est l'instant t le plus ancien pour lequel un delta de la séquence SO a été calculé.

La séquence SM contient tous les deltas calculés pour chaque instant t d'une fenêtre glissante $[t_3; t_2]$ allant de l'instant $t_2$ à l'instant $t_3$. Les instants $t_2$ et $t_3$ sont les instants t, respectivement le plus récent et le plus ancien, pour lesquels des deltas de la séquence SM ont été calculés. Dans ce mode de réalisation, la fenêtre glissante $[t_3; t_2]$ se déplace en même temps que la fenêtre $[t_1; t_0]$ de manière à ce que la séquence SO contienne toujours les N deltas calculés les plus récents et que la séquence SM contiennent toujours les M deltas calculés qui précèdent immédiatement ceux de la séquence SO.

Ici, les séquences SO et SM sont distinctes et séparées l'une de l'autre par aucun delta calculé. Ainsi, l'intervalle de temps $]t_1; t_2[$ ne contient aucun instant t d'exécution de l'instruction I1.

Dans ce mode de réalisation, les tailles des séquences SO et SM sont en permanence liées par la relation suivante : N = M-1.

À chaque fois qu'un nouveau delta est ajouté à la séquence SA, lors d'une étape 108, le delta le plus ancien de cette séquence SA est effacé. De plus, le module 24 met à jour et mémorise les séquences SO et SM suite à cette modification de la séquence SA. Ici, le nouveau delta calculé est ajouté à la séquence SO et devient le delta le plus récent de cette séquence. Les autres deltas sont décalés d'une unité vers la gauche sur le graphique de la figure 5. Le précédent delta le plus ancien de la séquence SO est effacé de la séquence SO et devient le delta le plus récent de la séquence SM.

Lors d'une étape 110, le module 24 acquiert une distribution statistique modèle DSM. Une distribution statistique est un tableau qui associe, à chaque classe de valeur possible pour les deltas calculés d'une séquence d'accès, un nombre qui permet d'obtenir le nombre d'occurrence des valeurs de cette classe dans cette séquence d'accès. Pour maximiser l'efficacité de la prédiction, la séquence d'accès prise comme modèle doit correspondre à un motif qui se répète plusieurs fois dans la séquence d'accès lors de l'exécution du programme 12. Dans ce mode de réalisation, la séquence d'accès prise comme modèle est la séquence SM et la distribution DSM est construite à chaque fois que la séquence SM est modifiée.

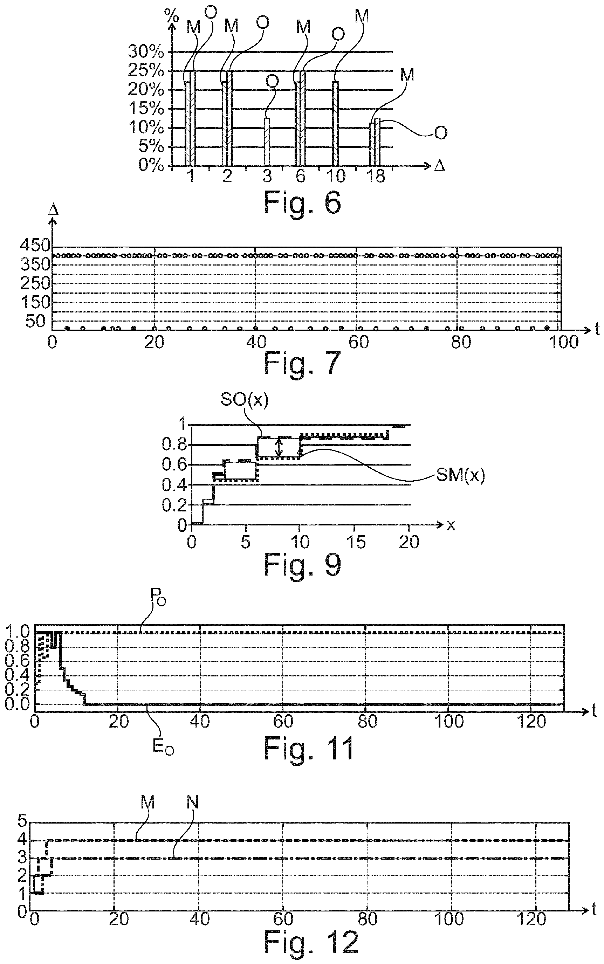

Ici, chaque classe de la distribution DSM correspond à une seule valeur possible pour les deltas calculés. Le nombre associé à chaque classe est obtenu en dénombrant le nombre d'occurrence de cette classe dans la séquence SM puis en divisant ce dénombrement par la taille M de la séquence SM. Ainsi, dans ce mode de réalisation, ce nombre correspond donc une fréquence d'apparition. La distribution DSM, ainsi construite pour la séquence SM de la figure 5, est représentée par des barres M dans l'histogramme de la figure 6.

Ensuite, lors d'une étape 112, une distribution statistique observée DSO est construite. La distribution DSO est la distribution statistique de la séquence SO. Cette distribution DSO est construite comme décrit en référence à l'étape 110, sauf que ce sont les deltas contenus dans la séquence SO qui sont pris en compte et non pas les deltas contenus dans la séquence SM. La distribution DSO, construite pour la séquence SO de la figure 5, est représentée par des barres O dans l'histogramme de la figure 6.

Lors d'une étape 114, le module 24 identifie dans la distribution DSO construite la classe la plus déficitaire. La classe la plus déficitaire est la classe pour laquelle la différence NoDSM - NoDSO est maximale. NoDSM et NoDSO sont les nombres associés par, respectivement les distributions DSM et DSO, à la même classe. Pour cela, le module 24 compare la distribution DSO, construite lors de l'étape 112, à la distribution DSM construite lors de l'étape 110. Dans le cas représenté sur la figure 6, la classe la plus déficitaire est la classe associée à la valeur « 10 ». Cela signifie que si la séquence SO reproduit un motif proche de celui qui s'est produit pendant la séquence SM, alors il est fortement probable que la valeur du prochain delta calculé soit égale à 10. Pour cette raison, la valeur de la classe la plus déficitaire identifiée lors de l'étape 114 est appelée delta prédit par la suite.

On notera que contrairement au procédé de prédiction connu, le procédé décrit ici est robuste vis-à-vis de permutations dans l'ordre temporel dans lequel apparaissent les deltas d'un motif qui se répètent plusieurs fois lors de l'exécution du programme 12.

Ce procédé est aussi robuste vis-à-vis de certains écarts entre le motif observé et le modèle de ce motif. Par exemple, ici, la séquence SO de la figure 5 comporte la valeur « 3 » qui n'existe pas dans la séquence SM. Or, cette différence, ne perturbe en rien l'identification du delta prédit.

Lors d'une étape 116, le module 24 fournit en tant que prédiction de la donnée à précharger, l'adresse, dite « prédite », de cette donnée dans la mémoire 6. Pour cela, le module 24 calcule cette adresse prédite à partir du delta prédit lors de l'étape 114. Par exemple, le module 24 ajoute à la dernière adresse accédée par l'instruction I1, la valeur du delta prédit. La dernière adresse accédée par l'instruction II est contenue dans la liste mémorisée lors des étapes 102 et 104.

Le procédé de la figure 4 a été implémenté et testé avec un programme qui réalise une rotation d'une image numérique. Le résultat obtenu est illustré par le graphe de la figure 7. L'axe des abscisses de ce graphe indique les instants t où l'instruction I1 a été exécutée. Pour chacun de ces instants t, le graphe comporte un cercle si le delta prédit et le delta réellement observé sont identiques et un point noir si le delta observé ne se superpose pas avec le delta prédit. Ce graphe montre que très souvent, le delta prédit est correct et donc que le microprocesseur 20 accède très rapidement à la donnée à lire. Par exemple, dans les simulations réalisées, le delta prédit est différent du delta réellement calculé seulement dans 16 % des cas.

Le procédé de la figure 8 est identique à celui de la figure 4 sauf que les étapes 110, 112 et 114 sont remplacées par des étapes 150, 152 et 154.

L'étape 150 est identique à l'étape 110 sauf que la distribution DSM construite est mémorisée sous la forme d'une fonction $SM(x)$ de répartition connue sous le terme anglais de « cumulative distribution function ». La fonction de répartition $SM(x)$ indique et retourne la probabilité que la valeur d'un delta calculé de la séquence SM ait une valeur inférieure au seuil x. La fonction $SM(x)$, obtenue à partir de la séquence SM de la figure 5, est représentée sur le graphe de la figure 9. Sur ce graphe, l'axe des abscisses contient les différentes valeurs possibles pour le seuil x.

La probabilité retournée par la fonction $SM(x)$ est comprise entre 0 et 1, où « 0 » correspond à une probabilité nulle et « 1 » correspond à une probabilité de 100 %. Pour chaque valeur possible du seuil x, la valeur de la fonction $SM(x)$ est obtenue en dénombrant dans la séquence SM le nombre de deltas calculés dont la valeur est inférieure à ce seuil x. Ensuite, ce dénombrement est divisé par la taille M de la séquence SM.

De même, lors de l'étape 152, la distribution DSO construite est mémorisée sous la forme d'une fonction $SO(x)$ de répartition. La fonction $SO(x)$ est construite comme décrite pour la fonction $SM(x)$ sauf qu'on utilise la séquence SO pour la construire à la place de la séquence SM.

L'identification de la classe la plus déficitaire, lors de l'étape 154, est alors obtenue en calculant pour chaque valeur de x égale à une valeur possible d'un delta calculé, la différence suivante : $SM(x) - SM(x-1) - [SO(x) - SO(x-1)]$. La classe la plus déficitaire est égale à la valeur de x pour laquelle cette différence est maximale. On notera que pour la classe la plus déficitaire on a les deux égalités suivantes : $NoDSM = SM(x) - SM(x-1)$ et $NoDSO = SO(x) - SO(x-1)$. L'étape 154 identifie donc comme classe la plus déficitaire la même classe que celle identifiée en mettant en oeuvre le procédé de la figure 4.

De préférence, en plus du procédé de la figure 4 ou 8, le module 24 exécute un procédé d'ajustement dynamique de la taille des séquences SM et SO. Un exemple d'un tel procédé d'ajustement dynamique va maintenant être décrit en référence à la figure 10. Comme pour les procédés précédents, le procédé de la figure 10 est décrit dans le cas particulier de l'instruction I1.

A intervalles prédéterminés, par exemple à chaque fois que la distribution DSM ou la distribution DSO est modifiée, lors d'une étape 160, le module 24 calcule une métrique po de similarité entre les distributions DSM et DSO. Par exemple, ici, le module 24 implémente le test d'hypothèse non paramétrique de Cramer-Von Mises pour deux échantillons. Ce test est utilisé pour comparer les fonctions de la répartition $SM(x)$ et $SO(x)$ entre elles. Pour cela, au préalable, ces fonctions $SM(x)$ et $SO(x)$ sont construites, par exemple, comme décrit en référence aux étapes 150 et 152. Ce test d'hypothèse est bien connu et seules ses principales caractéristiques sont rappelées ici. La distance w entre les deux distributions statistiques est définie par la relation suivante :

$$w^2 = \int_{-\infty}^{+\infty} \left[ SM(x) - SO(x) \right] dSO(x)$$

La statistique T de similarité du test dans le cas où les deux échantillons correspondent, respectivement, aux séquences SM et SO, est donnée par la relation suivante :

$$T = N\omega^2 = \frac{U}{NM(N+M)} - \frac{4MN-1}{6(M+N)}$$

- où N et M sont les tailles, respectivement, des séquences SO et SM, et
- U est défini par la relation suivante :

$$U = N\sum_{i=1}^{N}(r_i - i)^2 + M\sum_{j=1}^{M}(s_j - j)^2$$

où $r_i$ et $s_j$ sont respectivement, le rang des deltas, respectivement des séquences SM et SO, dans la séquence SA.

Dans ce mode de réalisation, la métrique po de similarité est obtenue à partir de la statistique T ainsi calculée. Ici, la métrique po est égale à la valeur-p plus connue sous le terme anglais de « p-value ». Par exemple, le module 24 calcule la métrique po à l'aide de la relation suivante :

$$p = \frac{T - \varepsilon T}{\sqrt{45 \cdot Var(T)}} + \frac{1}{6}$$

où :

- p est la valeur-p po,
- $\varepsilon T$ est défini par la relation suivante :

$$\varepsilon T = \frac{1}{6} + \frac{1}{6(M+N)}$$

- Var(T) est défini par la relation suivante :

$$Var(T) = \frac{1}{45} \cdot \frac{M+N+1}{(M+N)^2} \cdot \frac{4MN(M+N) - 3(M^2 + N^2) - 2MN}{4MN}$$

Si la métrique po dépasse un seuil $S_{po}$ prédéterminé, les distributions DSM et DSO sont considérées comme similaires. Dans le cas contraire, elles sont considérées comme étant différentes.

En parallèle, lors d'une étape 164, et pour le même instant t que celui pour lequel la métrique po est calculé, le module 24 calcule une erreur Eo de prédiction dont la valeur est d'autant plus importante que le nombre de prédictions erronées est important. Par exemple, ici, l'erreur Eo est un taux d'erreur égal au rapport NPC/NPT, où :

- NPC est le nombre de fois où le delta prédit identifié pour l'instant t est égal au delta réellement calculé ultérieurement pour cet instant t, et

- NPT est le nombre total d'instants t pour lesquels un delta prédit a été identifié.

Typiquement le rapport NPC/NPT est calculé en prenant en compte seulement les C derniers instants t, où C est un nombre prédéterminé supérieur à deux ou cinq. Ici, C est égal à cinq.

Ensuite, lors d'une étape 166, le module 24 détermine automatiquement s'il doit modifier la taille des séquences SM et SO. Par exemple, à cet effet, le module 24 vérifie si les deux conditions suivantes sont simultanément remplies :

- condition 1) : po $\leq S_{po}$, et
- condition 2) : Eo $\geq S_{Eo}$.

Lorsque la condition 1) est vérifiée, cela signifie que la distribution DSM est substantiellement différente de la distribution DSO. Lorsque la condition 2) est vérifiée, cela signifie que le taux d'erreur de prédiction est important.

Les seuils $S_{po}$ et $S_{Eo}$ sont des seuils prédéterminés et réglés expérimentalement pour que le procédé d'ajustement dynamique de la taille des séquences SM et SO fonctionne correctement quel que soit le programme exécuté. Le seuil $S_{po}$ est typiquement compris entre 0 et 1. Ici, sa valeur est choisie supérieure ou égale à 0,9 et, de préférence, supérieure ou égale à 0,95 ou 0,99.

Si les deux conditions 1) et 2) sont simultanément vérifiées, le module 24 procède immédiatement à une étape 168, lors de laquelle les tailles des séquences SM et SO sont modifiées. Par exemple, il incrémente de 1 les tailles M et N. Si la taille M atteint une taille maximale $TM_{max}$ prédéfinie, la taille M est réinitialisée à une valeur minimale supérieure ou égale à 2 ou 4. La taille M peut aussi être réinitialisée à la valeur zéro. Dans ce cas, le pré-chargement de données dans la mémoire tampon 26 est désactivé au moins pour le M+N instants t suivants.

Si l'une des deux conditions 1) et 2) n'est pas vérifiée, les tailles des séquences SM et SO ne sont pas modifiées.

Les procédés des figures 8 et 10 ont été conjointement mis en oeuvre lors de l'exécution du programme 12 qui exécute une rotation d'une image numérique. Le graphe de la figure 11 représente l'évolution de la métrique po et de l'erreur Eo au cours du temps. Le graphe de la figure 12 représente l'évolution au cours du temps des tailles M et N des séquences SM et SO lors de l'exécution de ce même programme 12. On constate que rapidement la taille des séquences SM et SO se verrouille sur une bonne valeur.

Toutefois, le procédé de la figure 10 ne permet pas toujours de trouver la taille M optimale. Par exemple, si la séquence d'accès comporte une alternance répétée d'un premier motif et d'un second motif, le procédé de la figure 10 risque de verrouiller la taille M à une valeur égale à la taille du premier motif ou du second motif. Par exemple, la taille du premier motif est égale à quatre deltas successifs et la taille du second motif est égale à 3 deltas successifs. Dans ce type de situation, l'erreur Eo peut parfois encore être minimisée en prenant la taille M égale à la taille d'une fenêtre qui englobe systématiquement une occurrence du premier motif et une occurrence du second motif. Par exemple, un choix intéressant de la taille M si les premier et second motifs sont contigus est de prendre, dans cet exemple, M = 7 (4 + 3). Or, le procédé de la figure 10 arrête d'incrémenter la taille M dès qu'il a trouvé une taille qui vérifie simultanément les conditions 1) et 2). Ainsi, si les conditions 1) et 2) sont simultanément satisfaites avec M = 3 ou M = 4, le module 24 ne va pas explorer les tailles plus grandes et donc la taille M = 7. De plus, il se peut très bien que l'erreur Eo soit plus mauvaise pour M = 5 et M = 6 que pour M = 3 ou 4. Dès lors, continuer à augmenter la taille M alors que les conditions 1) et 2) sont déjà satisfaites risque d'accroître l'erreur de prédiction. Pour remédier à cet inconvénient, il est proposé d'exécuter en plus du procédé de la figure 10 ou à la place de ce procédé, un procédé d'exploration de différentes tailles possibles pour la séquence SM. Un mode de réalisation d'un tel procédé va maintenant être décrit en référence au procédé de la figure 13.

A intervalles prédéterminés, par exemple, dès que la taille M de la séquence SM est verrouillée sur une valeur donnée, lors d'une étape 180, le module 24 mémorise une séquence d'accès modèle SMP dite « de prédiction » et une séquence d'accès observée SOP. Un exemple de séquences SMP et SOP est représenté sur la figure 5. La séquence SMP contient uniquement les MP deltas calculés successivement pour chaque instant t compris à l'intérieur d'une fenêtre glissante $[t_5 ; t_4]$. Les instants $t_4$ et $t_5$ sont les instants, respectivement le plus récent et le plus ancien, pour lesquels un delta de la séquence SMP a été calculé. Ici, la taille MP est strictement supérieure à la taille M. Ainsi, l'instant $t_5$ est antérieur à l'instant $t_3$. La séquence SOP contient quant à elle uniquement les NP deltas calculés successivement pour chaque instant t compris à l'intérieur d'une fenêtre glissante $[t_4 ; t_0]$. Dans ce mode de réalisation, les tailles MP et NP sont reliées l'une à l'autre par la même relation que celle qui relie les tailles M et N. Ainsi, la taille NP est égale à MP-1. Pour la mise en oeuvre du procédé de la figure 13, la séquence SA mémorisée pour l'instruction I1 lors des étapes 100, 102 et 104 est la même. En effet, typiquement, la taille $T_{max}$ est supérieure ou égale à M + N + 1 et, de préférence, supérieure ou égale à M + N + 4 ou M + N + 6. Comme pour les séquences SM et SO, chaque mise à jour de la séquence SA provoque une mise à jour correspondante des séquences SMP et SOP.

Lors d'une étape 182, le module 24 construit des distributions statistiques DSMP et DSOP dites "de prédiction" à partir, respectivement, des séquences SMP et SOP. Pour faire cela, il procède comme décrit en référence aux étapes 150 et 152 sauf que ce sont les séquences SMP et SOP qui sont utilisées à la place, respectivement, des séquences SM et SO.

Lors d'une étape 184, le module 24 calcule une métrique pp de similarité entre la distribution DSMP et la distribution DSOP. Par exemple, pour cela, il procède comme décrit en référence à l'étape 160.

Lors de cette étape 184, le module 24 calcule également une erreur Ep de prédiction. Pour cela, il identifie un delta prédit en comparant la distribution DSMP à la distribution DSOP. A cet effet, il procède comme décrit en référence aux étapes 114 ou 154 sauf que les distributions DSMP et DSOP sont utilisées à la place, respectivement, des distribution DSM et DSO. Ensuite, il calcule l'erreur Ep de la même manière que ce qui a été décrit pour l'erreur Eo.

Si la métrique pp et l'erreur Ep sont meilleures que, respectivement, la métrique po et l'erreur Eo calculées au même moment en utilisant la séquence SM, alors il procède à une étape 186 où la taille M est modifiée pour qu'elle soit égale à la taille MP de la séquence SMP.

Dans le cas contraire, lors d'une étape 188, la taille MP de la séquence SMP est modifiée pour explorer d'autres tailles possibles de la séquence SM. Par exemple, la taille MP est incrémentée de 1. Si la taille MP atteint la taille maximale $TM_{max}$, le procédé est arrêté ou réinitialisé avec une taille MP plus petite. Lors de l'étape 188, la taille de la séquence SM n'est pas modifiée.

Ainsi, grâce au procédé de la figure 13, le module 24 peut trouver une taille M optimale pour la séquence SM.

De nombreux autres modes de réalisation sont possibles. Par exemple, ce qui a été décrit dans le cas particulier d'instructions de lecture peut également être mise en oeuvre lors de l'écriture d'une donnée dans la mémoire 6. En effet, l'écriture d'une donnée dans la mémoire 6 peut être accélérée en pré-chargeant dans la mémoire cache 22 la donnée pré-existante située à l'adresse où la donnée doit être écrite. Ensuite, lorsqu'une instruction d'écriture est exécutée, c'est la donnée pré-existante enregistrée dans la mémoire cache 22 qui est remplacée par une nouvelle donnée. L'écriture de la nouvelle donnée dans la mémoire cache 22 est plus rapide qu'une écriture directement dans la mémoire 6. La nouvelle donnée est alors déplacée ultérieurement de la mémoire cache 22 vers la mémoire 6 et remplace alors la donnée pré-existante qui s'y trouvait encore. Cette dernière étape de transfert d'une donnée entre la mémoire cache 22 et la mémoire 6 peut se faire sans interrompre l'exécution du programme par le microprocesseur 20. Dans ce cas, l'écriture d'une donnée dans la mémoire 6 implique donc l'exécution d'une instruction de lecture de la donnée pré-existante. Ce qui a été décrit précédemment peut donc être appliqué à cette instruction de lecture pour accélérer son exécution et donc l'exécution de l'écriture dans la mémoire 6. Dans ce dernier cas, l'adresse à prédir correspond à l'adresse qui contient la donnée pré-existante.

L'unité de calcul peut comporter plusieurs niveaux de mémoire cache hiérarchisés par vitesse d'accès. Ces différents niveaux de mémoire cache sont disposés entre le microprocesseur 20 et la mémoire principale 6. Par exemple, l'unité de calcul peut comprendre trois niveaux de mémoire cache communément appelés niveau L1, L2 et L3. L'accès à la mémoire cache de niveau L1 est plus rapide que l'accès à la mémoire cache de niveau L2. L'accès à la mémoire cache de niveau L2 est plus rapide que l'accès à la mémoire cache de niveau L3. Enfin, l'accès à la mémoire cache de niveau L3 est plus rapide que l'accès à la mémoire 6. Généralement, les tailles de ces mémoires caches varient en décroissant au fur et à mesure que l'on se rapproche de la mémoire à laquelle le microprocesseur accède le plus rapidement. En général, une donnée est d'abord enregistrée dans la mémoire 6. Ensuite, si utile, elle est transférée dans la mémoire cache de niveau L3. Si nécessaire, elle est ensuite transférée de la mémoire cache de niveau L3 vers la mémoire cache de niveau L2. Enfin, toujours si nécessaire, elle est transférée de la mémoire cache de niveau L2 vers la mémoire cache de niveau L1. Par exemple, il n'est pas possible de transférer une donnée de la mémoire 6 directement dans une mémoire cache de niveau L1 ou L2.

La mémoire cache de niveau L2 peut être réalisée sur le même substrat que celui utilisé pour réaliser le microprocesseur 20. Actuellement, la mémoire cache de niveau L3 est le plus souvent une mémoire réalisée sur une puce distincte de celle où est réalisé le microprocesseur.

Le procédé de prédiction d'une donnée à précharger décrit dans le cas particulier de la mémoire cache de niveau L1 peut aussi être mis en oeuvre pour prédire la donnée à précharger dans n'importe lequel de ces niveaux de mémoire cache. En particulier, le procédé décrit peut simultanément être mis en oeuvre pour chacun de ces niveaux de mémoire cache.

La mémoire tampon 26 peut être omise. Dans ce cas, la donnée prédite par le procédé de la figure 4 est directement enregistrée dans la mémoire cache 22 au lieu d'être d'abord enregistrée dans la mémoire tampon 26.

Le préchargement de données dans la mémoire tampon 26 n'est pas toujours systématiquement activé. Par exemple, le préchargement des données dans la mémoire tampon 26 est activé uniquement si les instructions de lecture sont situées dans la boucle de niveau le plus inférieur, c'est-à-dire qu'il n'existe pas d'autre boucle située à l'intérieur de cette boucle et contenant les mêmes instructions de lecture. L'activation du préchargement de données dans la mémoire tampon 26 est par exemple déclenchée par une instruction spécifique contenue dans le code du programme exécuté.

Les étapes 110 et 112 de constructions des distributions statistiques DSM et DSO peuvent être réalisées en parallèle ou dans l'ordre inverse de la figure 4.

En variante, à un instant donné, il est possible de prédire non pas une seule donnée à précharger mais plusieurs. Par exemple, la taille de la séquence SO est prise égale à M-a, où $\alpha$ est un nombre entier strictement supérieur à 1 et strictement inférieur à M-2 ou M/2. Lors de l'étape 114 ou 154, $\alpha$ deltas correspondant aux $\alpha$ classes les plus déficitaires de la distribution DSO sont identifiés. Ensuite, $\alpha$ adresses prédites sont construites, chacune à partir d'un de ces deltas prédits. Par exemple, $\alpha$ peut être égal à 2, 3 ou 4.

Dans un autre mode de réalisation, une classe des distributions DSM et DSO ne correspondant pas à une seule valeur possible pour des deltas calculés mais à une plage continue de valeurs possibles pour ces deltas calculés. Par exemple, la première classe contient les valeurs comprises entre 0 et 3, la deuxième classe les valeurs comprises entre 4 et 6 et ainsi de suite. Ainsi, chaque classe contient plusieurs valeurs possibles pour les deltas. Toutefois, comme précédemment, les classes sont de préférence disjointes les unes des autres et ne se chevauchent pas entre elles. Dès lors, lors de l'étape 114 ou 154, l'identification de la classe la plus déficitaire revient à identifier plusieurs deltas prédits. Ensuite, plusieurs adresses prédites sont construites à partir chacune d'un delta prédit respectif. Ainsi, dans cette variante, le procédé fournit plusieurs adresses prédites en tant que prédiction de plusieurs données à précharger dans la mémoire cache 22. De préférence, dans ce mode de réalisation, la taille d'une classe est choisie égale à la taille d'une ligne de la mémoire cache 22 ou d'un bloc de la mémoire cache 22.

En variante, la séquence SM est séparée de la séquence SO par un ou plusieurs deltas calculés. Ainsi, dans cette variante, les séquences SM et SO sont disjointes.

La séquence SM n'est pas nécessairement une séquence d'accès construite à partir des deltas calculés pendant une fenêtre glissante antérieure $[t_3 ; t_2]$. Par exemple, en variante, la séquence SM contient les deltas successivement calculés entre des instants $t_3$ et $t_2$ fixes qui n'évoluent plus ensuite au fur et à mesure que de nouveaux deltas sont calculés. A titre d'illustration, dans ce cas, la mémorisation de la séquence SM est déclenchée par des instructions incorporées dans le programme 12.

La séquence SM peut aussi être une séquence pré-enregistrée et chargée en mémoire au début de l'exécution du programme 12 comme décrit dans la demande de brevet US5305389 A1.

En variante, la séquence SO ne contient pas le delta calculé pour l'instant t le plus récent.

La relation qui relie la taille de la séquence SO à la taille de la séquence SM peut être différente. Par exemple, cette relation est définie par l'équation suivante: N = M-$\beta$, où $\beta$ est un nombre entier, de préférence, supérieur ou égal à deux et inférieur ou égal à M-2. Dans une autre variante, la taille N de la séquence SO peut être choisie supérieure à la taille M de la séquence SM. Dans ce cas, $\beta$ est un entier inférieur ou égal à -1 et, par exemple, supérieur ou égal à -5 ou -3.

La distribution DSM n'est pas nécessairement construite à partir d'une séquence d'accès relevée par le module 24. En variante, la distribution DSM est une distribution statistique pré-enregistrée dans la mémoire 8 et chargée par le programme 12 au début de son exécution ou au cours de son exécution. Dans ce cas, il n'est pas nécessaire de mémoriser la séquence SM pour construire la distribution DSM.

La distribution DSM ou DSO peut être mémorisée sous d'autres formes qu'un histogramme ou qu'une fonction de répartition. Par exemple, chaque distribution statistique est construite et mémorisée comme une densité de probabilité.

D'autres méthodes sont possibles pour calculer la métrique de similarité entre les distributions DSM et DSO. Par exemple, un calcul de la corrélation entre les distributions DSM et DSO fournit aussi une mesure de la similarité entre ces deux distributions statistiques. Un autre test d'hypothèse tel que le test d'hypothèse non paramétrique de Smirnov peut aussi être utilisé à la place du test de Cramer-Von Mises. Dans le cas du test d'hypothèse de Smirnov, la métrique po de similarité peut aussi être une valeur-p. Elle se calcule, par exemple, à l'aide de la relation suivante :

$$p(y) = 2\sum_{k=1}^{K}(-1)^{k+1}e^{\left(-2k^2y^2\right)}$$

où :

- p(y) est la valeur de la métrique de similarité po,
- K est un entier positif prédéterminé, typiquement supérieur à 3 ou 50 ou 100,
- y est défini par la relation suivante :

$$y = \sqrt{n}\Delta_n$$

- $\Delta_n$ est la statistique du test de Smirnov. Elle est l'équivalent de la statistique T du test de Cramer von misses. Elle est comprise entre 0 et 1. Elle correspond aussi à l'écart maximal entre les deux distributions statistiques.

- n est défini par la relation suivante :

$$n = \frac{NM}{N+M}$$

A un instant donné, des métriques de similarité entre plusieurs distributions DSM différentes et la distribution DSO peuvent être calculées. Ensuite, la distribution DSM la plus similaire à la distribution DSO est utilisée pour identifier le delta prédit. Par exemple, les différentes distributions DSM sont chacune construites à partir d'une séquence SM ayant une taille M différente des autres séquences SM utilisées pour construire les autres distributions DSM. Dès lors, cela permet pour un instant t donné de tester simultanément différentes tailles possibles de la séquence SM pour sélectionner, parmi ces différentes tailles testées, la taille la plus appropriée pour identifier le delta prédit. Ensuite, c'est cette taille la plus appropriée qui est utilisée pour la séquence SM lors des itérations suivantes du procédé.

Plutôt que d'utiliser une valeur-p en tant que métrique de similarité, il est aussi possible d'utiliser, par exemple, directement la statistique T ou $A_n$ et de la comparer à un seuil prédéterminé. Dans ce cas, la valeur du seuil prédéterminé est typiquement obtenue à partir d'une table qui donne la valeur de ce seuil en fonction du degré de confiance souhaité.

D'autres méthodes de calcul de l'erreur Eo de prédiction sont possibles. Par exemple, le nombre C est choisi beaucoup plus grand, voire même égal à l'infini. Il est aussi possible de calculer une erreur de prédiction qui est en plus fonction de l'écart, en valeur absolue, entre le delta prédit pour l'instant t suivant identifié à l'étape 114 ou 154 et le delta réellement calculé pour cet instant t.

Pour déclencher la modification de la taille des séquences SM et SO, d'autres critères sont possibles. Par exemple, en variante, une seule des conditions choisies parmi les conditions 1) et 2) est utilisée.

D'autres modes de réalisation de l'étape 168 sont possibles. Par exemple, la taille M est incrémentée de 2 en 2 et non pas de 1 en 1.

En variante, le procédé de la figure 13 est mis en oeuvre sans mettre en oeuvre le procédé de la figure 10. Par exemple, le procédé de la figure 13 est combiné avec la mise en oeuvre du procédé de la figure 4. Dans ce cas, une modification de la taille des séquences SM et SO est uniquement provoquée par l'exécution du procédé de la figure 13. Dans une autre variante, le procédé de la figure 13 est utilisé pour explorer des tailles MP possibles pour la séquence SMP plus petite que la taille M de la séquence SM actuellement utilisée.

Pour un même instant t donné, le procédé de la figure 13 peut être exécuté pour plusieurs tailles MP différentes. Cela permet d'explorer à un instant donné plusieurs tailles possibles pour la séquence SM.

Dans un autre mode de réalisation, une bibliothèque de plusieurs distributions DSM différentes est enregistrée dans la mémoire 6. Ensuite, à intervalles prédéterminés, le module 24 sélectionne dans cette bibliothèque la distribution DSM à utiliser. Par exemple, pour sélectionner la distribution DSM, il calcule pour chaque distribution DSM enregistrée dans cette bibliothèque la métrique de similarité et/ou l'erreur de prédiction comme décrit en référence à l'étape 184. Ensuite, il sélectionne la distribution DSM qui maximise la métrique de similarité et/ou qui minimise l'erreur de prédiction. Dans cette variante, il n'est pas nécessaire de mémoriser et d'utiliser la séquence SM.

Le module 24 de préchargement peut aussi être intégré à l'intérieur du microprocesseur 20. Il peut aussi être réalisé sous forme logiciel. Dans ce cas, c'est le microprocesseur 20 qui exécute les instructions enregistrées dans la mémoire du module 24. Dans ce dernier cas, le module 24 est un support d'enregistrement d'informations contenant les instructions nécessaires à l'exécution des procédés des figures 4, 8, 10 et 13. Le module 24 peut aussi être intégré à la mémoire cache 22. Dans ce cas, c'est le micro-calculateur 32 qui est adapté pour réaliser l'ensemble des fonctions du module 24.

## Revendications

1. Procédé d'exécution d'un programme, enregistré dans une mémoire principale, par un microprocesseur associé à une mémoire cache, ce procédé comportant :

- l'exécution par le microprocesseur d'une instruction de lecture d'une donnée nécessaire à l'exécution du programme, cette instruction contenant l'adresse où est enregistrée cette donnée dans la mémoire principale,
- si la donnée correspondant à l'adresse contenue dans l'instruction de lecture à exécuter se trouve dans la mémoire cache, la lecture (56) de cette donnée dans la mémoire cache, et sinon la lecture (58) de cette donnée dans la mémoire principale ou dans une autre mémoire différente de la mémoire cache,
- avant que le microprocesseur exécute une nouvelle fois la même instruction de lecture, la prédiction (62) de la donnée à précharger dans la mémoire cache et le préchargement de la donnée prédite dans la mémoire cache ou dans une mémoire tampon,

dans lequel la prédiction (62) est réalisée en exécutant un procédé de prédiction d'une donnée à précharger dans une mémoire cache, ce procédé de prédiction comportant :

a) pour chaque instant t où le microprocesseur exécute une instruction de lecture d'une donnée nécessaire à l'exécution du programme, le calcul (104) d'un écart, appelé delta, entre l'adresse de la donnée à lire contenue dans cette instruction de lecture exécutée à l'instant t et l'adresse de la donnée à lire contenue dans cette même instruction de lecture lors de sa précédente exécution à un instant t-1, deux instructions de lecture étant les mêmes si elles correspondent toutes les deux à la même valeur du compteur ordinal du microprocesseur,
b) la mémorisation (108) d'une séquence d'accès observée contenant uniquement les N deltas calculés successivement pour chaque instant t compris à l'intérieur d'une fenêtre glissante $[t_1 ; t_0]$, où les instants $t_0$ et $t_1$ sont égaux aux instants t, respectivement le plus récent et le plus ancien, pour lesquels a été calculé un delta de la séquence d'accès observée et le nombre N est un nombre entier prédéterminé supérieur ou égal à deux,

**caractérisé en ce que** le procédé de prédiction comporte aussi :

c) l'acquisition (110 ; 150) d'une distribution statistique, dite " modèle ", des deltas d'une séquence d'accès modèle, cette distribution statistique modèle comportant :

- des classes de valeurs possibles pour les deltas, et associé à chacune de ces classes,
- un nombre fonction du nombre d'occurrence de cette classe dans la séquence d'accès modèle,

d) la construction (112 ; 152) d'une distribution statistique, dite "observée", des deltas de la séquence d'accès observée,
e) l'identification (114, 154) dans la distribution statistique observée, en la comparant avec la distribution statistique modèle, de la classe la plus déficitaire, c'est-à-dire de la classe pour laquelle la différence NoDSM - NoDSO est maximale, où NoDSM et NoDSO sont les nombres d'occurrence de cette classe déduits, respectivement, de la distribution statistique modèle et de la distribution statistique observée,
f) la fourniture (116) en tant que prédiction de la donnée à précharger dans la mémoire cache avant la prochaine exécution de la même instruction de lecture, d'au moins une adresse prédite où est contenue la donnée à précharger, cette adresse prédite étant construite à partir de la classe la plus déficitaire identifiée lors de l'étape e).

2. Procédé selon la revendication 1, dans lequel, lors de l'étape c), l'acquisition de la distribution statistique modèle comporte :

- la mémorisation (108) d'une séquence d'accès modèle contenant uniquement les M derniers deltas successivement calculés pour chaque instant t compris à l'intérieur d'une fenêtre glissante $[t_3 ; t_2]$ antérieure à la fenêtre glissante $[t_1 ; t_0]$, où les instants $t_2$ et $t_3$ sont égaux aux instants t, respectivement le plus récent et le plus ancien, pour lesquels a été calculé un delta de la séquence d'accès modèle, et le nombre de deltas calculés pour des instants t compris entre les instants $t_2$ et $t_1$ est une constante prédéterminée, et le nombre M est un nombre entier prédéterminé supérieur ou égal à deux, et
- à chaque fois qu'une nouvelle séquence d'accès modèle est mémorisée, la construction (110 ; 150) de la distribution statistique modèle à partir des deltas de cette séquence d'accès modèle mémorisée.

3. Procédé selon la revendication 2, dans lequel, systématiquement, il n'existe aucun instant t compris entre les instants $t_2$ et $t_1$ pour lequel un delta est calculé de sorte que la séquence d'accès modèle précède immédiatement en permanence la séquence d'accès observée.

4. Procédé selon l'une quelconque des revendications précédentes, dans lequel le procédé comporte :

- le calcul (160) d'une métrique de similarité dont la valeur varie de façon monotone en fonction de l'importance des différences entre les distributions statistiques modèle et observée et/ou le calcul (164) d'une erreur de prédiction dont la valeur varie de façon monotone en fonction du nombre de fois où l'adresse prédite à partir de la séquence d'accès observée pendant la fenêtre glissante $[t_1 ; t_0]$ est différente de l'adresse de la donnée à lire réellement contenue dans l'instruction de lecture exécutée à l'instant suivant $t_0+1$, et
- en réponse au franchissement d'un seuil prédéterminé par la métrique de similarité calculée et/ou par l'erreur de prédiction calculée, la modification (168) du nombre N de deltas contenus dans la séquence d'accès observée ou du nombre M de deltas contenus dans la séquence d'accès modèle.

5. Procédé selon l'une quelconque des revendications précédentes, dans lequel le procédé comporte :

- le calcul (160) d'une première métrique de similarité dont la valeur varie de façon monotone en fonction de l'importance des différences entre les distributions statistiques modèle et observée et/ou le calcul (164) d'une première erreur de prédiction dont la valeur varie de façon monotone en fonction du nombre de fois où l'adresse prédite à partir de la distribution statistique modèle et de la séquence d'accès observée pendant la fenêtre glissante $[t_1 ; t_0]$ est différente de l'adresse de la donnée à lire réellement contenue dans l'instruction de lecture exécutée à l'instant suivant $t_0+1$, et
- la mémorisation (180) d'une séquence d'accès, dite " de prédiction ", contenant uniquement P deltas successivement calculés pour chaque instant t compris à l'intérieur d'une fenêtre glissante $[t_5 ; t_4]$ antérieure à la fenêtre glissante $[t_1 ; t_0]$, où les instants $t_4$ et $t_5$ sont égaux aux instants t, respectivement le plus récent et le plus ancien, pour lesquels a été calculé un delta de la séquence d'accès de prédiction et le nombre P est nombre entier prédéterminé différent du nombre M,
- la construction (182) d'une distribution statistique dite " de prédiction ", à partir des deltas de la séquence d'accès de prédiction,
- le calcul (184) d'une seconde métrique de similarité et/ou d'une seconde erreur de prédiction en utilisant la distribution statistique de prédiction à la place de la distribution statistique modèle, puis
- si la seconde métrique de similarité calculée ou la seconde erreur de prédiction calculée est meilleure que, respectivement, la première métrique de similarité calculée ou la première erreur de prédiction calculée, alors le nombre M est pris égale (186) au nombre P pour l'itération suivante du procédé, sinon le nombre M reste inchangé.

6. Procédé selon l'une quelconque des revendications précédentes, dans lequel la séquence d'accès observée contient systématiquement le delta calculé à partir de l'adresse de la donnée à lire contenue dans l'instruction de lecture exécutée le plus récemment.

7. Procédé selon l'une quelconque des revendications précédentes, dans lequel, à chaque itération de l'étape e), une seule adresse prédite est fournie.

8. Support d'enregistrement d'informations, **caractérisé en ce qu'**il comporte des instructions pour l'exécution d'un procédé conforme à l'une quelconque des revendications précédentes, lorsque ces instructions sont exécutées par un microprocesseur.

9. Module électronique (24) de prédiction d'une donnée à précharger dans une mémoire cache, ce module étant agencé pour:

a) pour chaque instant t où un microprocesseur exécute une instruction de lecture d'une donnée nécessaire à l'exécution d'un programme, calculer un écart, appelé delta, entre l'adresse de la donnée à lire contenue dans cette instruction de lecture exécutée à l'instant t et l'adresse de la donnée à lire contenue dans cette même instruction de lecture lors de sa précédente exécution à un instant t-1, deux instructions de lecture étant les mêmes si elles correspondent toutes les deux à la même valeur du compteur ordinal du microprocesseur,
b) mémoriser une séquence d'accès observée contenant uniquement les N deltas calculés successivement pour chaque instant t compris à l'intérieur d'une fenêtre glissante $[t_1 ; t_0]$, où les instants $t_0$ et $t_1$ sont égaux aux instants t, respectivement le plus récent et le plus ancien, pour lesquels a été calculé un delta de la séquence d'accès observée et le nombre N est un nombre entier prédéterminé supérieur ou égal à deux,

**caractérisé en ce que** le module électronique est aussi agencé pour :

c) acquérir une distribution statistique, dite " modèle ", des deltas d'une séquence d'accès modèle, cette distribution statistique modèle comportant :

- des classes de valeurs possibles pour les deltas, et associé à chacune de ces classes,
- un nombre fonction du nombre d'occurrence de cette classe dans la séquence d'accès modèle,

d) construire une distribution statistique, dite "observée", des deltas de la séquence d'accès observée,
e) identifier dans la distribution statistique observée, en la comparant avec la distribution statistique modèle, la classe la plus déficitaire, c'est-à-dire la classe pour laquelle la différence NoDSM - NoDSO est maximale, où NoDSM et NoDSO sont les nombres d'occurrence de cette classe déduits, respectivement, de la distribution statistique modèle et de la distribution statistique observée,

f) fournir en tant que prédiction de la donnée à précharger dans la mémoire cache avant la prochaine exécution de la même instruction de lecture, au moins une adresse prédite où est contenue la donnée à précharger, cette adresse prédite étant construite à partir de la classe la plus déficitaire identifiée lors de l'étape e).

**Patentansprüche**

1.  Verfahren zur Ausführung eines Programms, das in einem Hauptspeicher registriert ist, durch einen Mikroprozessor, der einem Cache-Speicher zugeordnet ist, wobei dieses Verfahren umfasst:

    - durch den Mikroprozessor die Ausführung eines Lesebefehls eines für die Ausführung des Programms notwendigen Datums, wobei dieser Befehl die Adresse enthält, an der dieses Datum im Hauptspeicher aufgezeichnet ist,
    - wenn sich das Datum, das der in dem auszuführenden Lesebefehl enthaltenen Adresse entspricht, in dem Cache-Speicher befindet, das Lesen (56) dieses Datums in dem Cache-Speicher und andernfalls das Lesen (58) dieses Datums in dem Hauptspeicher oder in einem anderen, zum Cache-Speicher unterschiedlichen Speicher,
    - bevor der Mikroprozessor ein neuerliches Mal denselben Lesebefehl ausführt, die Vorhersage (62) des in den Cache-Speicher vorzuladenden Datums und das Vorladen des vorhergesagten Daums in den Cache-Speicher oder in einen Pufferspeicher,

    wobei die Vorhersage (62) durch Ausführen eines Verfahrens zur Vorhersage eines in einen Cache-Speicher vorzuladenden Datums durchgeführt wird, wobei dieses Vorhersageverfahren umfasst:

    a) für jeden Zeitpunkt t, zu dem der Mikroprozessor einen Lesebefehl eines für die Ausführung des Programms notwendigen Datums ausführt, die Berechnung (104) einer Abweichung, Delta genannt, zwischen der Adresse des zu lesenden Datums, das in diesem Lesebefehl, der zum Zeitpunkt t ausgeführt wird, enthalten ist, und der Adresse des zu lesenden Datums, das in diesem selben Lesebefehl bei seiner vorhergehenden Ausführung zu einem Zeitpunkt t-1 enthalten ist, wobei zwei Lesebefehle dieselben sind, wenn sie beide demselben Wert des Ordinalzählers des Mikroprozessors entsprechen,
    b) Speichern (108) einer beobachteten Zugangssequenz, die nur die N Deltas enthält, die nacheinander für jeden Zeitpunkt t berechnet wurden, der in einem gleitenden Fenster [$t_1$; $t_0$], in dem die Zeitpunkte $t_0$ und $t_1$ mit den letzten bzw. ältesten Zeitpunkten t identisch sind, für die ein Delta der beobachteten Zugangssequenz berechnet wurde und die Zahl N eine vorbestimmte ganze Zahl größer oder gleich zwei ist, enthalten ist,

    **dadurch gekennzeichnet, dass** das Vorhersageverfahren auch umfasst:

    c) die Erfassung (110; 150) einer so genannten statistischen "Modell"-Verteilung der Deltas einer Modellzugangssequenz, wobei diese statistische Modellverteilung umfasst:

       - Klassen von möglichen Werten für die Deltas und jeder dieser Klassen zugeordnet
       - eine Zahl, die von der Trefferzahl dieser Klasse in der Modellzugangssequenz abhängt,

    d) die Erstellung (112; 152) einer so genannten "beobachteten" statistischen Verteilung der Deltas der beobachteten Zugangssequenz,
    e) die Identifizierung (114, 154) in der beobachteten statistischen Verteilung durch ihren Vergleich mit der statistischen Modellverteilung der defizitärsten Klasse, d. h. der Klasse, für die die Differenz NoDSM - NoDSO maximal ist, wobei NoDSM und NoDSO die Trefferzahlen dieser Klasse sind, die von der statistischen Modellverteilung bzw. der beobachteten statistischen Verteilung abgeleitet sind,
    f) als Vorhersage des in den Cache-Speicher vorzuladenden Datums vor der nächsten Ausführung desselben Lesebefehls die Bereitstellung (116) mindestens einer vorhergesagten Adresse, in der das vorzuladende Datum enthalten ist, wobei diese vorhergesagte Adresse aus der in Schritt e) identifizierten defizitärsten Klasse erstellt ist.

2.  Verfahren nach Anspruch 1, bei dem in Schritt c) die Erfassung der statistischen Modellverteilung umfasst:

- das Speichern (108) einer Modellzugangssequenz, die nur die M letzten Deltas enthält, die nacheinander für jeden Zeitpunkt t berechnet wurden, der in einem gleitenden Fenster $[t_3; t_2]$ vor dem gleitenden Fenster $[t_1; t_0]$ enthalten ist, in dem die Zeitpunkte $t_2$ und $t_3$ mit den letzten bzw. ältesten Zeitpunkten t identisch sind, für die ein Delta der Modellzugangssequenz berechnet wurde, und die Zahl von berechneten Deltas für Zeitpunkte t, die zwischen den Zeitpunkten $t_2$ und $t_1$ enthalten sind, eine vorbestimmte Konstante ist, wobei die Zahl M eine vorbestimmte ganze Zahl größer oder gleich zwei ist, und

- immer wenn eine neue Modellzugangssequenz gespeichert wird, die Erstellung (110; 150) der statistischen Modellverteilung aus den Deltas dieser Modellzugangssequenz gespeichert wird.

3. Verfahren nach Anspruch 2, bei dem systematisch kein Zeitpunkt t vorhanden ist, der zwischen den Zeitpunkten $t_2$ und $t_1$ enthalten ist, für den ein Delta berechnet wird, so dass die Modellzugangssequenz permanent unmittelbar vor der beobachteten Zugangssequenz kommt.

4. Verfahren nach einem der vorhergehenden Ansprüche, wobei das Verfahren umfasst:

- die Berechnung (160) einer Ähnlichkeitsmetrik, deren Wert sich monoton in Abhängigkeit von der Größe der Unterschiede zwischen der statistischen Modellverteilung und der beobachteten statistischen Verteilung verändert, und/oder die Berechnung (164) eines Vorhersagefehlers, dessen Wert sich monoton in Abhängigkeit von der Anzahl von Malen, an denen die vorhergesagte Adresse auf Basis der beobachteten Zugangssequenz während des gleitenden Fensters $[t_1; t_0]$ zu der Adresse des zu lesenden Datums, die tatsächlich in dem Lesebefehl, der zum folgenden Zeitpunkt $t_0+1$ ausgeführt wird, enthalten ist, unterschiedlich ist, und

- als Antwort auf die Überschreitung einer vorbestimmten Grenze durch die berechnete Ähnlichkeitsmetrik und/oder durch den berechneten Vorhersagefehler die Änderung (168) der Zahl N von Deltas, die in der beobachteten Zugangssequenz enthalten sind, oder der Zahl M von Deltas, die in der Modellzugangssequenz enthalten sind.

5. Verfahren nach einem der vorhergehenden Ansprüche, wobei das Verfahren umfasst:

- Berechnung (160) einer ersten Ähnlichkeitsmetrik, deren Wert sich monoton in Abhängigkeit von der Größe der Unterschiede zwischen der statistischen Modellverteilung und der beobachteten statistischen Verteilung verändert, und/oder die Berechnung (164) eines ersten Vorhersagefehlers, dessen Wert sich monoton in Abhängigkeit von der Anzahl von Malen, an denen die vorhergesagte Adresse auf Basis der statistischen Modellverteilung und der beobachteten Zugangssequenz während des gleitenden Fensters $[t_1; t_0]$ zu der Adresse des zu lesenden Datums, die tatsächlich in dem Lesebefehl, der zum folgenden Zeitpunkt $t_0+1$ ausgeführt wird, enthalten ist, unterschiedlich ist, und

- Speichern (180) einer so genannten "Vorhersage"-Zugangssequenz, die nur P Deltas enthält, die nacheinander für jeden Zeitpunkt t berechnet wurden, der in einem gleitenden Fenster $[t_5; t_4]$ vor dem gleitenden Fenster $[t_1; t_0]$ enthalten ist, in dem die Zeitpunkte $t_4$ und $t_5$ mit den letzten bzw. ältesten Zeitpunkten t identisch sind, für die ein Delta der Vorhersagezugangssequenz berechnet wurde, und die Zahl P eine vorbestimmte ganze Zahl ist, die sich von der Zahl M unterscheidet,

- Erstellung (182) einer so genannten statistischen "Vorhersage"-Verteilung auf Basis der Deltas der Vorhersagezugangssequenz,

- Berechnung (184) einer zweiten Ähnlichkeitsmetrik und/oder eines zweiten Vorhersagefehlers unter Verwendung der statistischen Vorhersageverteilung an Stelle der statistischen Modellverteilung, dann

- wenn die zweite berechnete Ähnlichkeitsmetrik oder der zweite berechnete Vorhersagefehler besser als die erste berechnete Ähnlichkeitsmetrik bzw. der erste berechnete Vorhersagefehler ist, Annahme der Zahl M gleich (186) der Zahl P zur folgenden Iteration des Verfahrens, andernfalls bleibt die Zahl M unverändert.

6. Verfahren nach einem der vorhergehenden Ansprüche, bei dem die beobachtete Zugangssequenz systematisch ein Delta enthält, das auf Basis der Adresse des zu lesenden Datums, die in dem zuletzt ausgeführten Lesebefehl enthalten ist, berechnet wurde.

7. Verfahren nach einem der vorhergehenden Ansprüche, bei dem bei jeder Iteration des Schritts e) nur eine vorhergesagte Adresse bereitgestellt wird.

8. Informationsaufzeichnungsträger, **dadurch gekennzeichnet, dass** er Befehle für die Ausführung eines Verfahrens nach einem der vorhergehenden Ansprüche umfasst, wenn diese Befehle von einem Mikroprozessor ausgeführt werden.

**9.** Elektronikmodul (24) zur Vorhersage eines in einen Cache-Speicher vorzuladenden Datums, wobei dieses Modul eingerichtet ist, um:

a) für jeden Zeitpunkt t, zu dem ein Mikroprozessor einen Lesebefehl eines für die Ausführung eines Programms notwendigen Datums ausführt, eine Abweichung, genannt Delta, zwischen der Adresse des zu lesenden Datums, die in diesem zum Zeitpunkt t ausgeführten Lesebefehl enthalten ist, und der Adresse des zu lesenden Datums, die in diesem selben Lesebefehl während seiner vorhergehenden Ausführung zu einem Zeitpunkt t-1 enthalten ist, zu berechnen, wobei die zwei Lesebefehle dieselben sind, wenn sie beide demselben Wert des Ordinalzählers des Mikroprozessors entsprechen,

b) eine beobachtete Zugangssequenz zu speichern, die nur die N Deltas enthält, die nacheinander für jeden Zeitpunkt t berechnet wurden, der in einem gleitenden Fenster $[t_1; t_0]$, in dem die Zeitpunkte $t_0$ und $t_1$ mit den letzten bzw. ältesten Zeitpunkten t identisch sind, für die ein Delta der beobachteten Zugangssequenz berechnet wurde und die Zahl N eine vorbestimmte ganze Zahl größer oder gleich zwei ist, enthalten ist,

**dadurch gekennzeichnet, dass** das Elektronikmodul auch eingerichtet ist, um:

c) eine so genannte statistische "Modell"-Verteilung der Deltas einer Modellzugangssequenz zu erfassen, wobei diese statistische Modellverteilung umfasst:

- Klassen von möglichen Werten für die Deltas und jeder dieser Klassen zugeordnet
- eine Zahl, die von der Trefferzahl dieser Klasse in der Modellzugangssequenz abhängt,

d) eine so genannte "beobachtete" statistische Verteilung der Deltas der beobachteten Zugangssequenz zu erstellen,

e) in der beobachteten statistischen Verteilung durch ihren Vergleich mit der statistischen Modellverteilung die defizitärste Klasse zu identifizieren, d. h. die Klasse, für die die Differenz NoDSM - NoDSO maximal ist, wobei NoDSM und NoDSO die Trefferzahlen dieser Klasse sind, die von der statistischen Modellverteilung bzw. der beobachteten statistischen Verteilung abgeleitet sind,

f) als Vorhersage des in den Cache-Speicher vorzuladenden Datums vor der nächsten Ausführung desselben Lesebefehls mindestens eine vorhergesagte Adresse bereitzustellen, in der das vorzuladende Datum enthalten ist, wobei diese vorhergesagte Adresse aus der in Schritt e) identifizierten defizitärsten Klasse erstellt ist.

**Claims**

**1.** Method for executing a program, recorded in a main memory, by a microprocessor associated with a cache memory, this method comprising:

- the execution by the microprocessor of an instruction to read a datum necessary for the execution of the program, this instruction containing the address where this datum is recorded in the main memory,
- if the datum corresponding to the address contained in the read instruction to be executed is situated in the cache memory, the reading (56) of this datum in the cache memory, and otherwise the reading (58) of this datum in the main memory or in another memory different from the cache memory,
- before the microprocessor executes the same read instruction another time, the prediction (62) of the datum to be preloaded into the cache memory and the preloading of the predicted datum into the cache memory or into a buffer memory, wherein the prediction (62) is carried out by executing a method for predicting a datum to be preloaded into a cache memory, this prediction method comprising:

a) for each instant t at which the microprocessor executes an instruction to read a datum necessary for the execution of the program, the calculation (104) of a disparity, called delta, between the address of the datum to be read contained in this read instruction executed at the instant t and the address of the datum to be read contained in this same read instruction during its previous execution at an instant t-1, two read instructions being the same if they both correspond to the same value of the program counter of the microprocessor,

b) the storage (108) of an observed access sequence containing only the N deltas calculated successively for each instant t lying within a sliding window $[t_1; t_0]$, where the instants $t_0$ and $t_1$ are equal to the most recent and the oldest instants t, respectively, for which a delta of the observed access sequence has been calculated, and the number N is a predetermined integer number greater than or equal to two, **characterized in that** the prediction method also comprises:

c) the acquisition (110; 150) of a, so-called "model", statistical distribution of the deltas of a model access sequence, this model statistical distribution comprising:

- classes of possible values for the deltas, and associated with each of these classes,
- a number dependent on the number of occurrences of this class in the model access sequence,

d) the construction (112; 152) of a, so-called "observed", statistical distribution of the deltas of the observed access sequence,

e) the identification (114, 154) in the observed statistical distribution, by comparing it with the model statistical distribution, of the most deficient class, that is to say of the class for which the difference NoDSM - NoDSO is maximal, where NoDSM and NoDSO are the numbers of occurrences of this class that are deduced, respectively, from the model statistical distribution and from the observed statistical distribution,

f) the provision (116) as prediction of the datum to be preloaded into the cache memory before the next execution of the same read instruction, of at least one predicted address where the datum to be preloaded is contained, this predicted address being constructed on the basis of the most deficient class identified during step e).

2. Method according to Claim 1, in which, during step c), the acquisition of the model statistical distribution comprises:

- the storage (108) of a model access sequence containing only the last M deltas calculated successively for each instant t lying within a sliding window $[t_3; t_2]$ prior to the sliding window $[t_1; t_0]$, where the instants $t_2$ and $t_3$ are equal to the most recent and the oldest instants t, respectively, for which a delta of the model access sequence has been calculated, and the number of deltas calculated for instants t lying between the instants $t_2$ and $t_1$ is a predetermined constant, and the number M is a predetermined integer number greater than or equal to two, and
- each time that a new model access sequence is stored, the construction (110; 150) of the model statistical distribution on the basis of the deltas of this stored model access sequence.

3. Method according to Claim 2, in which, systematically, there does not exist any instant t, lying between the instants $t_2$ and $t_1$, for which a delta is calculated so that the model access sequence always immediately precedes the observed access sequence.

4. Method according to any one of the preceding claims, in which the method comprises:

- the calculation (160) of a similarity metric whose value varies in a monotonic manner as a function of the size of the differences between the model and observed statistical distributions and/or the calculation (164) of a prediction error whose value varies in a monotonic manner as a function of the number of times for which the address predicted on the basis of the observed access sequence during the sliding window $[t_1; t_0]$ is different from the address of the datum to be read actually contained in the read instruction executed at the following instant $t_0+1$, and
- in response to the crossing of a predetermined threshold by the calculated similarity metric and/or by the calculated prediction error, the modification (168) of the number N of deltas contained in the observed access sequence or of the number M of deltas contained in the model access sequence.

5. Method according to any one of the preceding claims, in which the method comprises:

- the calculation (160) of a first similarity metric whose value varies in a monotonic manner as a function of the size of the differences between the model and observed statistical distributions and/or the calculation (164) of a first prediction error whose value varies in a monotonic manner as a function of the number of times for which the address predicted on the basis of the model statistical distribution and of the observed access sequence during the sliding window $[t_1; t_0]$ is different from the address of the datum to be read actually contained in the read instruction executed at the following instant $t_0+1$, and
- the storage (180) of a, so-called "prediction", access sequence containing only P deltas calculated successively for each instant t lying within a sliding window $[t_5; t_4]$ prior to the sliding window $[t_1; t_0]$, where the instants $t_4$ and $t_5$ are equal to the most recent and the oldest instants t, respectively, for which a delta of the prediction access sequence has been calculated, and the number P is a predetermined integer number different from the number M,
- the construction (182) of a, so-called "prediction", statistical distribution on the basis of the deltas of the prediction access sequence,

- the calculation (184) of a second similarity metric and/or of a second prediction error by using the statistical prediction distribution in place of the model statistical distribution, and then
- if the second calculated similarity metric or the second calculated prediction error is better than, respectively, the first calculated similarity metric or the first calculated prediction error, then the number M is taken equal (186) to the number P for the following iteration of the method, otherwise the number M remains unchanged.

6. Method according to any one of the preceding claims, in which the observed access sequence systematically contains the delta calculated on the basis of the address of the datum to be read contained in the most recently executed read instruction.

7. Method according to any one of the preceding claims, in which, at each iteration of step e), a single predicted address is provided.

8. Information recording medium, **characterized in that** it comprises instructions for the execution of a method in accordance with any one of the preceding claims, when these instructions are executed by a microprocessor.

9. Electronic module (24) for predicting a datum to be preloaded into a cache memory, this module being designed to:

a) for each instant t at which a microprocessor executes an instruction to read a datum necessary for the execution of a program, calculate a disparity, called delta, between the address of the datum to be read contained in this read instruction executed at the instant t and the address of the datum to be read contained in this same read instruction during its previous execution at an instant t-1, two read instructions being the same if they both correspond to the same value of the program counter of the microprocessor,

b) storing an observed access sequence containing only the N deltas calculated successively for each instant t lying within a sliding window $[t_1; t_0]$, where the instants $t_0$ and $t_1$ are equal to the most recent and the oldest instants t, respectively, for which a delta of the observed access sequence has been calculated, and the number N is a predetermined integer number greater than or equal to two,

**characterized in that** the electronic module is also designed to:

c) acquire a, so-called "model", statistical distribution of the deltas of a model access sequence, this model statistical distribution comprising:

- classes of possible values for the deltas, and associated with each of these classes,
- a number dependent on the number of occurrences of this class in the model access sequence,

d) construct a, so-called "observed", statistical distribution of the deltas of the observed access sequence,
e) identify in the observed statistical distribution, by comparing it with the model statistical distribution, the most deficient class, that is to say the class for which the difference NoDSM - NoDSO is maximal, where NoDSM and NoDSO are the numbers of occurrences of this class that are deduced, respectively, from the model statistical distribution and from the observed statistical distribution,
f) provide as prediction of the datum to be preloaded into the cache memory before the next execution of the same read instruction, at least one predicted address where the datum to be preloaded is contained, this predicted address being constructed on the basis of the most deficient class identified during step e).

Fig. 1

Fig. 2

Fig. 3

Fig. 5

Fig. 4

Fig. 8

Fig. 10

Fig. 13

**Fig. 6**

**Fig. 7**

**Fig. 9**

**Fig. 11**

**Fig. 12**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5305389 A1

**Littérature non-brevet citée dans la description**

- **JOSEPH D. ; GRUNWALD D.** Prefetching using Markov predictors. *Computers, IEEE transactions,* Février 1999, vol. 48 (2), 121-133